# EUROPEAN PATENT APPLICATION

(11) **EP 4 717 486 A1**
(43) Date of publication of application: **01.04.2026**
(21) Application number: 24202723.3
(22) Date of filing: 25.09.2024
(51) Int. Cl.: B60K 6/28, B60K 6/485, B60L 58/20, B60W 10/06, B60W 10/08, B60W 10/26, B60W 10/30, B60W 20/13, B60W 20/16, B60W 20/40, B60W 30/188, B60W 30/192, B60W 30/194, B60K 6/26

(54) **A SYSTEM AND METHOD FOR STARTING A HYBRID VEHICLE**

(71) Applicant: Ford Global Technologies, LLC, Dearborn, MI 48126 (US)
(72) Inventor: COX, David, London, SE16 5XJ (GB); HESKETH, David, Ingatestone, CM4 9LN (GB); HARTMANN, Bastian, 50354 Hürth (DE)
(74) Representative: HG Law International LLP

(57) **Abstract**

The present disclosure relates to a method and system for starting a hybrid vehicle. The method comprising the steps of receiving a catalyst conditioning request, determining a traction battery capacity of the hybrid vehicle and a non-traction battery capacity of the hybrid vehicle, determining a catalyst conditioning time based on the traction battery capacity, determining that the traction battery capacity is sufficient to start the internal combustion engine (ICE) and condition the catalyst during the catalyst conditioning time, determining whether the non-traction battery capacity is sufficient to support a non-traction load during the catalyst conditioning time, and initiating post-ICE start catalyst conditioning when the non-traction battery capacity is not sufficient to support a non-traction load during the catalyst conditioning time, or initiating pre-ICE start catalyst conditioning when the non-traction battery capacity is sufficient to support a non-traction load during the catalyst conditioning time.

## Description

### Background

The present disclosure relates to a method and system for starting a hybrid vehicle. Particularly, but not exclusively, the present disclosure relates to method and system for starting a hybrid vehicle based on battery capacity of traction and non-traction battery.

### Summary

The automotive industry has long been challenged by the need to enhance the capture of emissions generated by internal combustion engines (ICE). One of the most significant advancements in this regard has been the introduction of after-treatment systems such as catalysts. These devices facilitate the conversion of gases in the emissions. However, the effectiveness of the catalysts is highly dependent on their operating temperature and require a certain level of heat to reach optimal efficiency. For optimal operation, the heating of the catalysts prior to igniting or starting the ICE has been a preferred approach. However, such pre-conditioning is supported using a vehicle battery, thus reducing the battery capacity available for other vehicle operations during or before the start of the ICE of the vehicle.

**An** object of the present disclosure is to provide a method and system for starting a hybrid vehicle which satisfies vehicle or ICE start experience, and enhances emissions performance of the ICE or vehicle.

According to the system and the method, described herein, there is provided a method for starting a hybrid vehicle comprising the steps of receiving a catalyst conditioning request, determining a traction battery capacity of a traction battery of the hybrid vehicle and a non-traction battery capacity of a non-traction battery of the hybrid vehicle, determining a catalyst conditioning time based on the traction battery capacity, determining that the traction battery capacity is sufficient to start the internal combustion engine (ICE) and condition the catalyst for the duration of the catalyst conditioning time, determining whether the non-traction battery capacity is sufficient to support a non-traction load for the duration of the catalyst conditioning time, and initiating post-ICE start catalyst conditioning when the non-traction battery capacity is not sufficient to support a non-traction load for the duration of the catalyst conditioning time, or initiating pre-ICE start catalyst conditioning when the non-traction battery capacity is sufficient to support a non-traction load for the duration of the catalyst conditioning time.

For example, conditioning the catalyst before ICE start, particularly in vehicles with ample battery capacity, offers advantages such as reduced cold-start emissions, enhanced emission control, and a smoother transition to ICE power. This approach ensures the catalyst is already warm, minimizing pollutants right from the start. In another case, initiating catalyst conditioning after ICE start conserves battery energy, which is especially beneficial for hybrids with limited battery capacity. This strategy utilizes ICE heat for catalyst warming and can extend the electric-only driving range, making it more efficient for driving conditions. Determining the optimal timing for catalyst conditioning based on real-time battery capacity provides a strategic advantage in enhancing the operational efficiency.

In some examples, the step of receiving a catalyst conditioning request comprises identifying at least one condition of the hybrid vehicle based on a signal received from a vehicle control module. The at least one condition of the hybrid vehicle includes receiving a request to start the ICE, opening of driver's door of the vehicle, seat belt fastening, vehicle wake-up request from a driver's mobile phone application, an ignition key state, or an ignition push button state.

For example, the catalyst conditioning is requested based on the at least one condition of the hybrid vehicle, designated as a highest-level trigger within a hierarchy of activation event. Subsequently, the request to start an ICE is positioned as a secondary trigger in the hierarchy, with activation governed by a countdown timer which is automatically initiated after a predetermined time duration following the start of catalyst conditioning. In a case, opening of driver's door of the vehicle first triggers the catalyst conditioning and then after a countdown timer triggers the request to start the ICE of the hybrid vehicle.

In some examples, the method comprises the step of determining a first set of boundary conditions of the traction battery and a second set of boundary conditions of the non-traction battery.

In some examples, the method comprises determining whether the first set or second set of boundary conditions require ICE start using the traction battery capacity, and starting the ICE using the non-traction battery when the first set or second set of boundary conditions require ICE start without using the traction battery capacity, or starting the ICE using the traction battery when the first set or second set of boundary conditions require ICE start using the traction battery capacity. The boundary condition includes ambient temperature, catalyst temperature, traction battery state, or non-traction battery state.

In some examples, the method comprises initiating post-ICE start catalyst conditioning when the traction battery capacity is not sufficient to start the ICE and condition the catalyst for the duration of the catalyst conditioning time.

In some examples, the method comprises monitoring, during the pre-ICE start catalyst conditioning, whether the non-traction battery capacity is sufficient to support the non-traction load for the duration of the catalyst conditioning time, and transitioning from the pre-ICE start catalyst conditioning to the post-ICE start catalyst conditioning when the monitored non-traction battery capacity is not sufficient to support the non-traction load for the duration of the catalyst conditioning time.

In some examples, the catalyst conditioning includes heating, or activation of the catalyst. In some examples, the catalyst is an electrically heated catalytic converter, an electric exhaust gas heated catalyst, or a combination thereof.

In some examples, if the battery cannot support catalyst conditioning, hybrid functions are restricted until recharged. During post-heating, ICE torque may be limited to maintain emissions, but the battery may temporarily mitigate torque derate. Such short bursts of power, while insufficient for conditioning the catalyst, can offset torque reduction during post-heating.

According to the system and the method, described herein, there is provided, a system for starting a hybrid vehicle comprising a traction battery, a non-traction battery, an internal combustion engine (ICE), and a processing unit. The processing unit is configured to receive a catalyst conditioning request, and initiate at least one of a pre-ICE start catalyst conditioning or a post-ICE start catalyst conditioning based on capacity of the non-traction battery to support a non-traction load for the duration of the catalyst conditioning time. The processing unit is further configured to determine the catalyst conditioning time based on capacity of the traction battery.

In some examples, the system is configured to determine that the traction battery capacity is sufficient to start the ICE and condition the catalyst for the duration of the catalyst conditioning time and initiate post-ICE start catalyst conditioning when the traction battery capacity is not sufficient to start the ICE and condition the catalyst for the duration of the catalyst conditioning time.

In some examples, the processing unit is communicatively coupled to a vehicle control module to receive the catalyst conditioning request comprising identification of at least one condition of the hybrid vehicle based on a signal received from the vehicle control module.

In some examples, the processing unit is configured to determine a first set of boundary conditions of the traction battery and a second set of boundary conditions of the non-traction battery. The processing unit is configured to determine whether the first or second boundary conditions require ICE start using the traction battery capacity and start the ICE using the non-traction battery when the first or second boundary conditions require ICE start without using the traction battery capacity, or start the ICE using the traction battery when the first or second boundary conditions require ICE start using the traction battery capacity.

In some examples, a hybrid vehicle comprises the system of starting the hybrid vehicle.

### Brief Description of the Drawings

**The** above and other objects and advantages of the disclosure will be apparent upon consideration of the following detailed description, taken in conjunction with the accompanying drawings, in which like reference characters refer to like parts throughout, and in which:
FIG. 1 illustrates a system for starting a hybrid vehicle, in accordance with some examples of the present disclosure;
FIG. 2 illustrates a system for starting a hybrid vehicle, in accordance with some examples of the present disclosure;
FIG. 3a illustrates a timeline for pre-ICE start catalyst conditioning in a hybrid vehicle, in accordance with examples of the present disclosure;
FIG. 3b illustrates a timeline for post-ICE start catalyst conditioning in a hybrid vehicle, in accordance with examples of the present disclosure;
FIG. 4 illustrates a method for starting a hybrid vehicle, in accordance with some examples of the present disclosure; and
FIG. 5 illustrates a method for starting a hybrid vehicle, in accordance with some examples of the present disclosure.

### Detailed Description of the Drawings

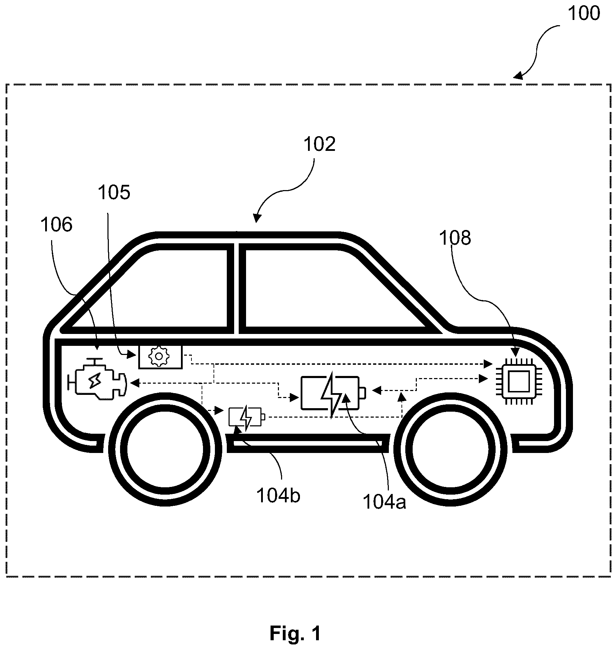

FIG. 1 illustrates a system (100) for starting a hybrid vehicle (102). The system (100) comprises a traction battery (104a), a non-traction battery (104b), an internal combustion engine (105), a catalyst (106), and a processing unit (108) communicatively coupled to the battery (104a, 104b) and the catalyst (106). The processing unit (108) is configured to receive a catalyst (106) conditioning request, and initiate at least one of a pre-ICE start catalyst (106) conditioning or a post-ICE start catalyst (106) conditioning based on capacity of the non-traction battery (104b) to support a non-traction load for the duration of the catalyst (106) conditioning time. The processing unit (108) is configured to determine the catalyst (106) conditioning time based on capacity of the traction battery (104a).

The hybrid vehicle (102) includes at least one of a mild hybrid electric vehicle, plug-in hybrid electric vehicle, or a full hybrid electric vehicle. The traction battery (104a) includes at least one of a 36-volt battery, 48-volt battery, hybrid battery, or a high-voltage battery pack. The non-traction battery (104b) is at least one a 12-volt battery, or an auxiliary battery. The battery capacity of the traction battery (104a) and non-traction battery (104b) is determined using at least one value of battery health, battery temperature, electrical load demand, battery stored energy, battery state of charge, current, or voltage.

The non-traction loads include energy consumed by at least one of a climate control (HVAC), lighting, infotainment, electronic control units, power steering, brake boosters, battery and inverter cooling, power windows, or systems like ADAS.

**The** processing unit (108) is at least one of a vehicle control module, a separate dedicated hardware, remote processor connected to the hybrid vehicle (102), or a combination thereof. The processing unit (108) is configured to determine that the traction battery (104a) capacity is sufficient to start the ICE (105) and condition the catalyst (106) for the duration of the catalyst (106) conditioning time and initiate post-ICE start catalyst (106) conditioning when the traction battery (104a) capacity is not sufficient to start the ICE (105) and condition the catalyst (106) for the duration of the catalyst conditioning time.

In some examples, the processing unit (108) is communicatively coupled to a vehicle control module to receive the catalyst (106) conditioning request comprising identification at least one condition of the hybrid vehicle (102) based on a signal received from the vehicle control module. The at least one condition of the hybrid vehicle (102) includes receiving a request to start the ICE (105), opening of driver's door of the vehicle (102), seat belt fastening, vehicle (102) wake-up request from a driver's mobile phone application, an ignition key state, or an ignition push button state.

**The** processing unit (108) is configured to determine a first set of boundary conditions of the traction battery (104a) and a second set of boundary conditions of the non-traction battery. (104b). The processing unit (108) is further configured to determine whether the first or second boundary conditions require ICE (105) start using the traction battery (104a) capacity, and start the ICE using the non-traction battery (104b) when the first or second boundary conditions require ICE (105) start without using the traction battery (104a) capacity, or start the ICE (105) using the traction battery (104a) when the first or second boundary conditions require ICE (105) start using the traction battery (104a) capacity. The boundary condition includes ambient temperature, catalyst temperature, traction battery state, or non-traction battery state.

**The** pre-ICE start catalyst (106) condition includes initiating the heating of the catalyst (106) before the start of the ICE (105) of the hybrid vehicle (102), and the post-ICE start catalyst (106) conditioning includes initiating the heating of the catalyst (106) after the start of the ICE (105) of the hybrid vehicle (102).

For example, when a driver opens the door of the hybrid vehicle (102), the processing unit (108) receives a catalyst (106) conditioning request. Subsequently, the processing unit (108) determines that SoC of a traction battery (104a) is 75% and SoC of a non-traction battery (104b) is 50%. Based upon the SoC of the traction battery (104a), the processing unit (108) determines that the time required to condition the catalyst (106) is Tx. Further, the processing unit (108) determines whether the non-traction battery (104b) at 50% SoC can handle non-traction load during the time Tx catalyst (106) conditioning time. In case, with 50% SoC, the non-traction battery (104b) can support the non-traction load for time Tx, the processing unit (108) initiates the pre-ICE start catalyst (106) conditioning. In another case, with 50% SoC, the non-traction battery (104b) cannot support the non-traction load for time Tx, the processing unit (108) delays the catalyst (106) conditioning and initiates the post-ICE start catalyst (106) conditioning.

In some examples, the processing unit (108) may prioritize the catalyst (106) conditioning by providing additional capacity of the traction battery (104a) to reduce the time for non-traction battery (104b) to support non-traction load, and then determine pre-ICE start catalyst (106) conditioning.

In some examples, the processing unit (108) estimates or predicts that the complete conditioning of the catalyst (106) will be required by the vehicle (102) in T1 seconds. Subsequently, the processing unit (108) determines that the current temperature of the catalyst (106) is Temp1 Degree Celsius, target optimal temperature of the catalyst (106) is Temp2 Degree Celsius, and the SOC of the traction battery (104a) is 75%. Based upon the determined parameters of catalyst (106) and the traction battery (104a), the processing unit (108) computes that the required capacity of the traction battery (104a) to heat the catalyst (106) is Cap1 units, and time duration required to heat the catalyst (106) is T2 seconds. Further, the processing unit (108) determines the available capacity of the traction battery (104a) and compare the available capacity with the required capacity to determine whether to initiate the pre-ICE start catalyst (106) condition, or the post-ICE start catalyst (106) conditioning. In one case, if the available capacity is more than the required capacity, however the remaining time T1 to complete conditioning the catalyst before the ICE (105) starts is less than the time T2 required to condition the catalyst (106), the processing unit (108) may determine and initiate the post-ICE start catalyst (106) conditioning.

For example, if the non-traction battery capacity exceeds 70%, the processing unit (108) may initiate catalyst (106) pre-conditioning before ICE (105) start. This approach ensures that the catalyst (106) reaches its optimal operating temperature faster, thereby reducing cold-start emissions, which are typically high during the initial ICE (105) run. This is particularly beneficial in urban environments where frequent stops and starts occurs, as it helps maintain low emission levels right from the start. Alternatively, if the non-traction battery capacity falls below 30%, the processing unit (108) may defer catalyst (106) conditioning until after the ICE (105) has started. In this case, the hybrid vehicle (102) conserves battery (104a, 104b) energy for propulsion, allowing the hybrid vehicle (102) to rely more on its electric motor, which is especially advantageous when operating in electric-only mode in low-speed zones. For instance, in a scenario where the hybrid vehicle (102) is navigating through heavy traffic with frequent stop-starts, delaying catalyst (106) conditioning helps to prioritize energy use for maintaining electric propulsion, thus extending the electric driving range and enhancing overall fuel efficiency.

For example, the non-traction battery (104b) in the hybrid vehicle (102) may struggle to support non-traction loads under several conditions, such as when the battery has a low state of charge due to extended inactivity or frequent short trips, or when cold weather reduces its capacity. Aging and degradation also diminish the battery's ability to hold a charge and deliver power, particularly under high electrical load demands or when multiple systems are operating simultaneously. Additionally, a malfunctioning charging system, such as a faulty alternator or DC-DC converter, can prevent the battery from recharging properly, while excessive parasitic drain or electrical system faults can deplete the battery, leaving it unable to power essential non-traction loads effectively. Within such cases, the post-ICE start conditioning of the catalyst (106) is preferred.

In some examples, the pre-ICE or the post-ICE start catalyst (106) conditioning is a type of catalyst (106) conditioning sequence, and the sequence includes determining a start time of the conditioning. The start time may include time of starting the conditioning of the catalyst (106) in reference to the start or ignition time of the ICE (105) of the hybrid vehicle (102). For example, the start time is determined as time T1 prior to the ignition of the ICE (105) if the processing unit (108) determines that time to condition catalyst (106) to a target optimal temperature will require time T2, and time remaining to start the ICE (105) is estimated asT3..

In some examples, the processing unit (108) may support the conditioning of the catalyst (106) in a hybrid fashion based on the determined parameters and estimated remaining time to complete the catalyst conditioning (105) before the ICE (105) starts. The catalyst (106) conditioning is supported for a determined time before the start of the ICE using the traction battery (104a) and supported for a determined time after the start of the ICE using at least one of an e-machine, e.g., alternator or belt-integrated starter generator (BISG), and/or power supply (104). For the avoidance of doubt, any reference herein to the term "BISG" is used within the context of MHEV operation. However, in the context of other examples, the term "BISG" should be understood as interchangeable with the broader term "e-machine".

In another example, the driver's seat adjustment acts as the primary trigger for initiating catalyst conditioning, ranking it as the highest priority in the activation sequence. Upon the driver adjusting the seat, catalyst conditioning is initiated, and a countdown timer is activated. As a secondary trigger, fastening the seat belt may prompt the system to prepare a request for starting the internal combustion engine (ICE), which will be automatically engaged once the countdown period has elapsed. In this setup, the driver's seat adjustment initiates catalyst conditioning, followed by the seat belt fastening, with the ICE starting after the countdown completes.

The trigger hierarchy defines the order of activation events, with higher-level triggers taking precedence over lower-level ones. The countdown timer may control the timing of secondary actions, ensuring they occur only after the completion of the primary trigger event.

The communicative coupling between the batteries (104a, 104b), the catalyst (106), the processing unit (108), or any other unit/module is supported using at least one of a wired or wireless communication protocol. The at least one wired communication protocol includes but is not limited to an ethernet (IEEE 802.3), a local interconnect network (LIN), a controller area network (CAN), a media-oriented system transport (MOST), and/or a FlexRay communications bus. The at least one wireless communication protocol includes but is not limited to radio frequency (RF), infrared (IrDA), Bluetooth, ZigBee (and other variants of the IEEE 802.15 protocol), a wireless fidelity Wi-Fi or IEEE 802.11 (any variation), IEEE 802.16 (WiMAX or any other variation), direct sequence spread spectrum (DSSS), frequency hopping spread spectrum (FHSS), global system for mobile communication (GSM), general packet radio service (GPRS), enhanced data rates for GSM Evolution (EDGE), long term evolution (LTE), cellular protocols (2G, 2.5G, 2.75G, 3G, 4G or 5G), near field communication (NFC), satellite data communication protocols, or any other protocols for wireless communication.

The processing unit (108) may include at least one memory module (not shown here) to store at least one of the determined capacity of the batteries (104a, 140b), the catalyst (106) conditioning time, action or rule set defined for at least one of the conditions of the hybrid vehicle (102), or any other variable relevant to the implementation for optimal starting of the hybrid vehicle (102). The memory module may further include the at least one of a volatile memory elements (for example, random access memory, such as DRAM, SRAM, SDRAM, etc.), non-volatile memory elements (for example, ROM, hard drive, etc.), other storage media or combinations thereof. In some examples, the memory module may have a distributed architecture, where various components are situated remotely from one another but can be accessed by the processing unit (108).

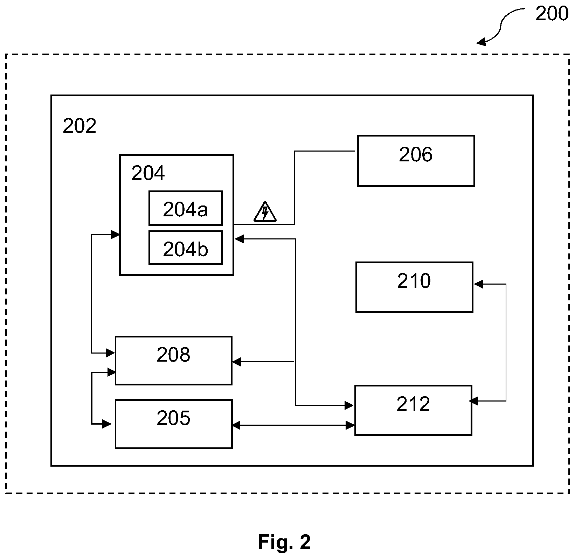

FIG. 2 illustrates a system (200) for starting a hybrid vehicle (202). The system (200) comprises a power supply (204), an internal combustion engine (ICE) (205), a catalyst (206), a vehicle control module (208), a sensing unit (210), and a processing unit (212) communicatively coupled to the power supply (204), the catalyst (206), the vehicle control module (208), and the sensing unit (210). The power supply (204) includes at least one traction battery (204a) and at least one non-traction battery (204b).

**The** vehicle control module (208) is communicatively coupled with the processing unit (212) to exchange a condition signal. The processing unit (212) is configured to identify at least one condition of the hybrid vehicle (202) based on the condition signal received from the vehicle control module (208). The processing unit (212) is configured to receive a catalyst conditioning request based on the identification of at least one condition of the hybrid vehicle (202). In some examples, the processing unit (212) and the vehicle control module (208) are same and integral units.

In some examples, the processing unit (212) is configured to estimate the remaining time duration to complete the catalyst (206) conditioning before the ICE (205) starts based on the identification of at least one condition of the hybrid vehicle (202). The at least one condition of the hybrid vehicle (202) includes but is not limited to receiving a request to start the ICE (205), opening of driver's door of the hybrid vehicle (202), seat belt fastening, hybrid vehicle (202) wake-up request from a driver's mobile phone application. In some examples, the processing unit (212) utilizes at least one of a driver behaviour history, identified vehicle condition, an artificial intelligence, or a machine learning algorithm to receive a catalyst conditioning request, or to estimate the remaining time duration to complete the catalyst (206) conditioning before the ICE (205) starts.

The sensing unit (210) is communicatively coupled to the processing unit (212) to transmit sensing information. For example, the sensing information includes at least one parameter of the traction battery (204a), non-traction battery (204b), the catalyst (206), or a component in connection with the traction battery (204a), non-traction battery (204b), or the catalyst (206). The sensing unit (210) includes at least one of a temperature, voltage, or current sensors. In some examples, the traction battery (204a), non-traction battery (204b) and the catalyst (206) directly transmit the signals related to the parameters to the processing unit (212). The at least one parameter of traction battery (204a) and non-traction battery (204b) includes at least one value of battery health, battery temperature, electrical load demand, battery stored energy, battery state of charge, current, or voltage. The at least one parameter of the catalyst (206) includes ambient temperature, target optimal temperature, or current temperature.

In some examples, the sensing unit (210) includes but is not limited to a vision, RADAR, LiDAR, UWB sensors to track the driver behaviour and activity, and subsequently support the vehicle control module (208), or the processing unit (212) to determine a condition of the hybrid vehicle (202) and receive the catalyst conditioning request. For example, the sensing unit (210) may track and determine that the driver is approaching the hybrid vehicle (202) and generate a signal for the vehicle control module (208), or the processing unit (212).

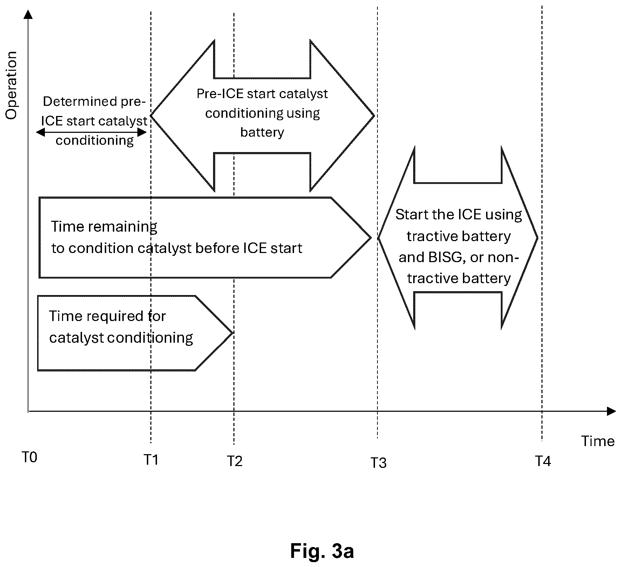

FIG. 3a illustrates a timeline for pre-ICE start catalyst conditioning in a hybrid vehicle. At time T0 (e.g., 0 seconds), the time required to condition the catalyst based on capacity of traction battery is determined as T2 (e.g., 10 seconds), and the non-traction battery's capacity is evaluated if non-traction battery can support the non-traction load for determined time T2. In current case, the non-traction battery is identified suitable to support the non-traction load during the catalyst conditioning time, and the pre-ICE start catalyst conditioning is initiated.

**At** time T1 (e.g., 5 seconds), based on the identification of the pre-ICE start catalyst conditioning, the heating of the catalyst is initiated using the traction battery, and at time T3 (e.g., 15 seconds), the ICE is ignited or started using at least one of the non-traction battery, or traction battery and the BISG.

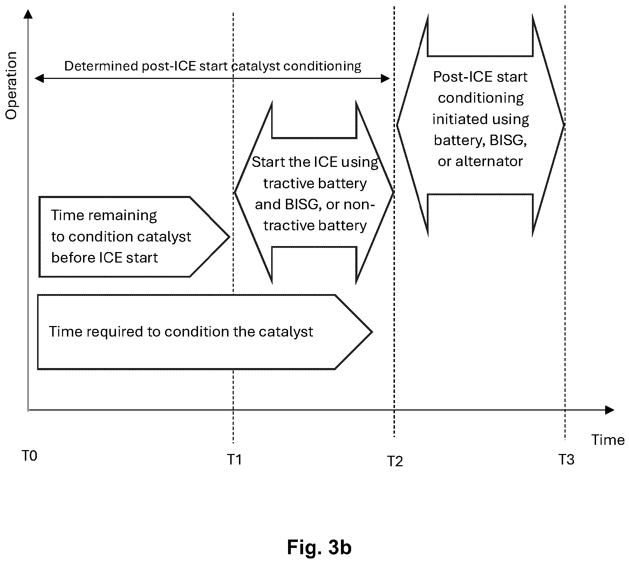

FIG. 3b illustrates a timeline for post-ICE start catalyst conditioning in a hybrid vehicle. At time T0 (e.g., 0 seconds), the time required to condition the catalyst based on capacity of traction battery is determined as T1 (e.g., 10 seconds), and the non-traction battery's capacity is evaluated if non-traction battery can support the non-traction load for determined time T1. In current case, the non-traction battery is identified not suitable to support the non-traction load during the catalyst conditioning time, and the post-ICE start catalyst conditioning is determined. At time T1, based on the identification of the post-ICE start catalyst conditioning, ICE is ignited or started using at least one of the non-traction battery, or the traction battery and the BISG. At time T2 (e.g.,15 seconds), after the ICE has started, the heating of the catalyst is initiated using the traction battery.

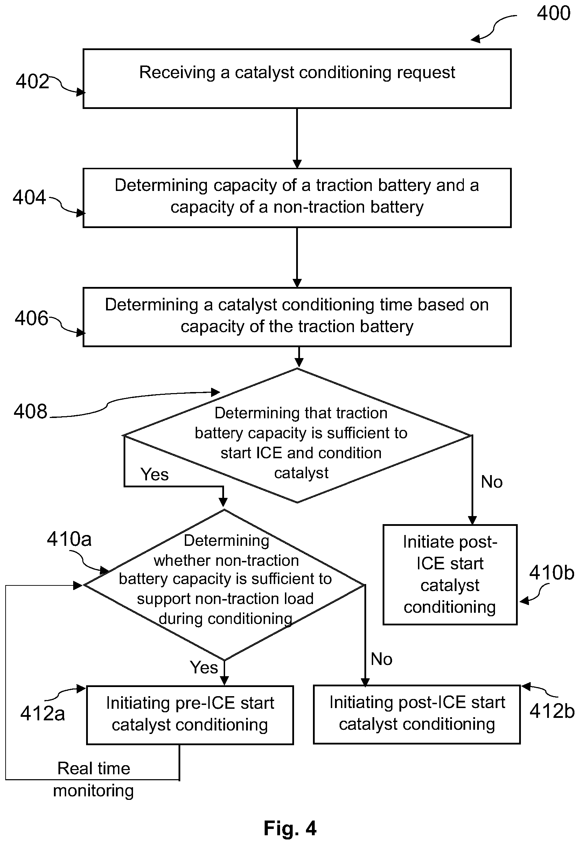

FIG. 4 illustrates a method (400) for starting a hybrid vehicle. The method (400) comprises the followings steps of receiving (402) a catalyst conditioning request, determining (404) a traction battery capacity of a traction battery of the hybrid vehicle and a non-traction battery capacity of a non-traction battery of the hybrid vehicle, determining (406) a catalyst conditioning time based on the traction battery capacity, determining (408) that the traction battery capacity is sufficient to start the internal combustion engine (ICE) and condition the catalyst for the duration of the catalyst conditioning time, and determining (410a) whether the non-traction battery capacity is sufficient to support a non-traction load for the duration of the catalyst conditioning time if the traction battery is determined to be sufficient to start the ICE and condition the catalyst, or initiating (410b) post-ICE start catalyst conditioning if the traction battery is determined to be non-sufficient to start the ICE and condition the catalyst.

Further, the method comprises the steps of initiating (412a) pre-ICE start catalyst conditioning when the non-traction battery capacity is sufficient to support a non-traction load for the duration of the catalyst conditioning time or initiating (412b) the post-ICE start catalyst conditioning when the non-traction battery capacity is not sufficient to support a non-traction load for the duration of the catalyst conditioning time.

The step of receiving (402) a catalyst condition request further include the steps of identifying at least one condition of the hybrid vehicle based on a signal from a vehicle control module and estimating the remaining time duration to complete the conditioning before the ICE starts based on the at least one identified condition.

**The** step of determining (404) a traction battery capacity of a traction battery of the hybrid vehicle and a non-traction battery capacity of a non-traction battery of the hybrid vehicle may include the steps of receiving at least one signal from the traction or non-traction battery to determine parameters such as battery health, battery temperature, electrical load demand, stored energy, battery state of charge to determine the battery capacity.

The step of determining (406) a catalyst conditioning time based on the traction battery capacity may further include determining parameters such as catalyst temperature, attributes of the configuration of the catalyst, target optimal temperature, ambient temperature, or exhaust gas temperature.

In some examples, the method (400) further comprises monitoring, during the pre-ICE start catalyst conditioning, whether the non-traction battery capacity is sufficient to support the non-traction load for the duration of the catalyst conditioning time, and transitioning from the pre-ICE start catalyst conditioning to the post-ICE start catalyst conditioning when the monitored non-traction battery capacity is not sufficient to support the non-traction load for the duration of the catalyst conditioning time.

For example, in a first case, a driver starts the hybrid vehicle in the morning when the battery is fully charged. The pre-conditioning of the catalyst is initiated before starting the ICE. As a result, the vehicle may emit fewer pollutants during operation of the vehicle. This is particularly useful if a driver frequently drives in areas with high traffic density and stop-and-go conditions.

In a second case, a driver on a weekend road trip with a mild hybrid electric vehicle, might begin their journey with a partially depleted battery. If the battery capacity is low, the vehicle delays catalyst conditioning until after the ICE starts, which enables conservation of battery power for longer stretches of electric-only driving or for assisting in vehicle performance, optimizing fuel efficiency, and extending the vehicle's range on highways or long-distance trips.

In a third case, for a delivery vehicle driven around the town, the vehicle's tractive battery might be at varying levels of charge throughout the day. If the driver starts the car with a low battery, the vehicle prioritizes conserving tractive battery power for driving rather than pre-conditioning the catalyst, which ensures that delivery driver has enough energy for the next short trip or stop, and the driver can still benefit from cleaner emissions once the ICE is running, and the catalyst begins to warm up.

In a fourth case, if a driver parks the hybrid vehicle for an extended period, such as at work or while shopping, the battery may be partially depleted by the time the driver returns. When the driver restarts the ICE, the vehicle can adjust catalyst conditioning based on the remaining battery charge. If the battery is low, it conserves power and initiates the post-ICE catalyst conditioning regime whereas a higher battery level might allow for pre-conditioning, ensuring cleaner emissions during initial driving. If the battery is sufficient, and pre-conditioning is initiated, vehicle can monitor the battery capacity in real-time and stop pre-conditioning when during real-time monitoring the battery capacity is identified to be non-sufficient.

In a fifth case, in urban areas with designated electric-only zones, where vehicles are required to operate without emissions, the vehicle can monitor battery capacity in real-time. If the battery is sufficiently charged, the vehicle can pre-condition the catalyst to ensure it is ready for low emission driving as soon as the driver enter the zone. Conversely, if the battery is low, the vehicle optimizes energy use to maximize electric-only driving within the zone.

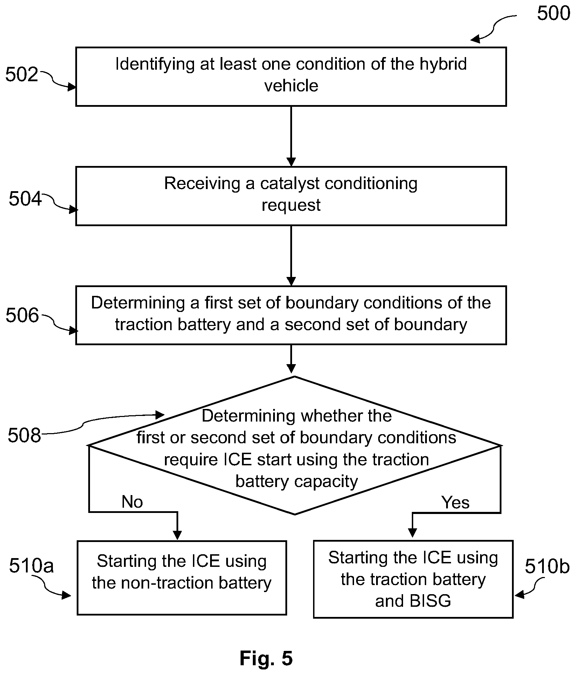

Fig. 5 illustrates a method (500) for starting a hybrid vehicle. The method (500) comprises the followings steps of identifying (502) at least one hybrid vehicle condition and receiving (504) a catalyst conditioning request, determining (506) a first set of boundary conditions of the traction battery and a second set of boundary conditions of the non-traction battery, determining (508) whether the first set or second set of boundary conditions require an internal combustion engine (ICE) start using the traction battery capacity, and starting (510a) the ICE using the non-traction battery when the first set or second set of boundary conditions require ICE start without using the traction battery capacity, or starting (510b) the ICE using the traction battery when the first set or second set of boundary conditions require ICE start using the traction battery capacity. The boundary condition includes ambient temperature, catalyst temperature, traction battery state, or non-traction battery state. For example, in extremely cold temperatures, the performance of the traction battery (e.g., high-voltage battery) may be impaired, reducing its ability to provide the necessary power for starting the vehicle. In such boundary conditions, the non-traction battery (e.g., auxiliary power) battery may be needed to support the starting process, especially to power up essential systems like the heating elements for the traction battery or to engage the starter motor.

For example, when the vehicle is in cold weather, the catalyst may be too cold to effectively convert emissions. To quickly bring the ICE and catalyst up to operating temperature, the vehicle might rely on the traction battery to warm up the catalyst and require the non-traction battery to initiate the ICE start. In such boundary conditions, the traction battery's efficiency and power output may be reduced, making the non-traction battery crucial for ensuring a reliable ICE start.

The above-stated descriptions are merely examples of implementations of this application but are not intended to limit the protection scope of this application. A person with ordinary skills in the art may recognize substantially equivalent structures or substantially equivalent acts to achieve the same results in the same manner or in a dissimilar manner; the exemplary embodiment should not be interpreted as limiting the disclosure to one embodiment.

While aspects of the present disclosure have been described in detail with reference to the illustrated embodiments, those skilled in the art will recognize that many modifications may be made thereto without departing from the scope of the present disclosure. The present disclosure is not limited to the precise construction and compositions disclosed herein; any and all modifications, changes, and variations apparent from the foregoing descriptions are within the spirit and scope of the disclosure as defined in the appended claims. Moreover, the present concepts expressly include any and all combinations and sub-combinations of the preceding elements and features.

The description is provided for clarification purposes and is not limiting. Words and phrases are to be accorded their ordinary, plain meaning unless indicated otherwise.

## Claims

1. A method for starting a hybrid vehicle, the method comprising:
receiving a catalyst conditioning request;
determining a traction battery capacity of a traction battery of the hybrid vehicle and a non-traction battery capacity of a non-traction battery of the hybrid vehicle;
determining a catalyst conditioning time based on the traction battery capacity;
determining that the traction battery capacity is sufficient to start an internal combustion engine (ICE) and condition catalyst for the duration of the catalyst conditioning time;
determining whether the non-traction battery capacity is sufficient to support a non-traction load for the duration of the catalyst conditioning time; and
initiating post-ICE start catalyst conditioning when the non-traction battery capacity is not sufficient to support the non-traction load for the duration of the catalyst conditioning time; or
initiating pre-ICE start catalyst conditioning when the non-traction battery capacity is sufficient to support the non-traction load for the duration of the catalyst conditioning time.

2. The method of claim 1, wherein receiving the catalyst conditioning request comprises:
identifying at least one condition of the hybrid vehicle based on a signal received from a vehicle control module.

3. The method of claim 2, wherein the at least one condition of the hybrid vehicle includes receiving a request to start the ICE, opening of driver's door of the vehicle, seat belt fastening, vehicle wake-up request from a driver's mobile phone application, an ignition key state, or an ignition push button state.

4. The method of claim 1, wherein the method comprises determining a first set of boundary conditions of the traction battery and a second set of boundary conditions of the non-traction battery.

5. The method of claim 4, wherein the method comprises:
determining whether the first set or second set of boundary conditions require ICE start using the traction battery capacity, and
starting the ICE using the non-traction battery when the first set or second set of boundary conditions require ICE start without using the traction battery capacity; or
starting the ICE using the traction battery when the first set or second set of boundary conditions require ICE start using the traction battery capacity.

6. The method of claim 4, wherein the boundary condition includes ambient temperature, catalyst temperature, traction battery state, or non-traction battery state.

7. The method of claim 1, wherein the method comprises initiating post-ICE start catalyst conditioning when the traction battery capacity is not sufficient to start the ICE and condition the catalyst for the duration of the catalyst conditioning time.

8. The method of claim 1, wherein the method comprises monitoring, during the pre-ICE start catalyst conditioning, whether the non-traction battery capacity is sufficient to support the non-traction load for the duration of the catalyst conditioning time; and
transitioning from the pre-ICE start catalyst conditioning to the post-ICE start catalyst conditioning when the monitored non-traction battery capacity is not sufficient to support the non-traction load for the duration of the catalyst conditioning time.

9. The method of claim 1, wherein the catalyst conditioning includes heating, or activation of the catalyst.

10. A system for starting a hybrid vehicle comprising:
a traction battery;
a non-traction battery;
an internal combustion engine (ICE);
a processing unit configured to:
receive a catalyst conditioning request; and
initiate at least one of a pre-ICE start catalyst conditioning or a post-ICE start catalyst conditioning based on capacity of the non-traction battery to support a non-traction load for the duration of the catalyst conditioning time; wherein the processing unit is configured to determine the catalyst conditioning time based on capacity of the traction battery.

11. The system of claim 10, wherein the processing unit is configured to:
determine that the traction battery capacity is sufficient to start the ICE and condition the catalyst for the duration of the catalyst conditioning time; and
initiate the post-ICE start catalyst conditioning when the traction battery capacity is not sufficient to start the ICE and condition the catalyst for the duration of the catalyst conditioning time.

12. The system of claim 10, wherein the processing unit is communicatively coupled to a vehicle control module to receive the catalyst conditioning request comprising identification of at least one condition of the hybrid vehicle based on a signal received from the vehicle control module.

13. The system of claim 10, wherein the processing unit is configured to determine a first set of boundary conditions of the traction battery and a second set of boundary conditions of the non-traction battery.

14. The system of claim 13, wherein the processing unit is configured to:
determine whether the first or second boundary conditions require ICE start using the traction battery capacity, and
start the ICE using the non-traction battery when the first or second boundary conditions require ICE start without using the traction battery capacity; or
start the ICE using the traction battery when the first or second boundary conditions require ICE start using the traction battery capacity.

15. A hybrid vehicle comprising system of claim 10.
